# EUROPEAN PATENT APPLICATION

(11) **EP 4 791 059 A1**
(43) Date of publication of application: **12.08.2026**
(21) Application number: 25156394.6
(22) Date of filing: 06.02.2025
(51) Int. Cl.: H04W 16/18, H04W 16/22

(54) **METHOD AND APPARATUS FOR MANAGING A MOBILE COMMUNICATION NETWORK USING A SEMANTIC KNOWLEDGE GRAPH**

(71) Applicant: Deutsche Telekom AG, 53113 Bonn (DE)
(72) Inventor: HEIDER-AVIET, Andreas, 13187 Berlin (DE)
(74) Representative: 2SPL Patentanwälte PartG mbB

(57) **Abstract**

Provided is a method (10) for managing a mobile communication network using a semantic knowledge graph (20; 30). The method (10) includes modeling (12) the mobile communication network and telecommunication domain knowledge as a semantic knowledge graph (20; 30) representing data describing an ontology of the mobile communication network and the telecommunication domain knowledge, the ontology including structured concepts, taxonomies, relationships, and constraints, wherein the semantic knowledge graph (20; 30) is configured to enable logical operations for inference. The method (10) includes obtaining (14) runtime data from the mobile communication network and correlating the runtime data with the semantic knowledge graph to perform reasoning (16), derive optimization decisions, and implement network changes based on the derived decisions.

## Description

### Field

The present disclosure relates to the field of mobile communication networks, and more specifically to the use of semantic knowledge graphs for network management, optimization, and autonomous decision-making.

### Background

In mobile communication networks, particularly in radio access networks (RANs), effective network planning and optimization require a deep understanding of various technical, environmental, and regulatory constraints. Traditionally, network management relies on human expertise to evaluate complex interdependencies between network elements, performance indicators, and operational policies. Engineers may analyze network performance data, such as key performance indicators (KPIs), fault logs, and user experience reports, to optimize coverage, improve service quality, and resolve network issues.

In the prior art, radio network optimization is largely a manual process, requiring engineers to interpret performance data, apply heuristics, and iteratively adjust network configurations. While some levels of automation exist, such as rule-based systems or self-organizing network (SON) features, these approaches are limited in their ability to comprehend a broader operational context. Current systems lack a semantic representation of the network and radio domain knowledge that can correlate configuration parameters, geographical constraints, traffic patterns, and performance data in a structured, meaningful way. Furthermore, existing approaches struggle with integrating historical, real-time, and predictive data, making it difficult to derive optimal long-term strategies for network adaptation.

A drawback of existing methods is the inability to autonomously model and reason about complex interdependencies within the network. For example, traditional optimization systems may suggest placing a new radio node at a location with optimal coverage, without recognizing terrain limitations, regulatory constraints, or technical feasibility. Similarly, current systems fail to systematically relate past network events (e.g., recurring interference issues) with present or future optimization decisions. Another limitation is the lack of a unified, structured knowledge base that can link network inventory data, policies, infrastructure characteristics, geographic constraints, network domain experience and expertise in a way that enables automated reasoning.

Thus, there may be a demand to provide a systematic, structured approach to managing and optimizing mobile communication networks that can semantically model network knowledge, relate diverse data sources, and enable automated reasoning for network decision-making, thereby reducing the dependency on manual intervention while improving network robustness, performance and adaptability.

### Summary

This demand is addressed by methods and apparatuses in accordance with the independent claims. Further advantageous embodiments are addressed by the dependent claims.

According to a first aspect of the present disclosure, it is provided a method for managing a mobile communication network using a semantic knowledge graph. The method includes modeling the mobile communication network and telecommunication domain knowledge as a semantic knowledge graph representing data describing an ontology of the mobile communication network and the telecommunication domain knowledge The ontology includes structured concepts, taxonomies, relationships, and constraints. The semantic knowledge graph is configured to enable logical operations for inference. The method further includes obtaining runtime data from the mobile communication network and correlating the runtime data with the semantic knowledge graph to perform reasoning, derive operational and optimization decisions, and implement network changes based on the derived decisions.

The method may further optionally include analyzing an impact of the implemented network changes on the performance of the mobile communication network. Yet further, the method may optionally include updating the semantic knowledge graph based on the analyzed impact.

Thus, the method for managing a mobile communication network may involve using a semantic knowledge graph. The method may include modeling the network and telecommunication-related knowledge as a semantic knowledge graph that can describe various aspects of the network, such as structured concepts, taxonomies, relationships, and constraints. The knowledge graph may be designed to support logical operations that could assist in drawing inferences. Additionally, the method may include obtaining runtime data from the network and correlating it with the semantic knowledge graph to facilitate reasoning, derive possible optimization decisions, and implement network adjustments based on these decisions. Further, the method may involve assessing how the implemented changes affect network performance and, based on this assessment, updating the knowledge graph accordingly. By structuring network-related information within a semantic knowledge graph, the method may support a more systematic way of organizing and interpreting data from different network components. This may allow for improved reasoning by relating configuration settings, performance indicators, general radio know-how, geographic infrastructure information and contextual constraints in a structured format. Additionally, integrating runtime data with the knowledge graph may help in adapting network configurations more efficiently by considering historical trends and real-time conditions. The ability to update the knowledge graph dynamically based on performance analysis may contribute to a more adaptive and responsive network management process, which may reduce the need for manual intervention and enhance overall network reliability.

According to some embodiments, the semantic knowledge graph incorporates historical configurations and planned future configurations of the mobile communication network. This may allow the graph to represent how the network has been set up previously and how it may be adjusted going forward. By incorporating both historical and planned configurations, the semantic knowledge graph may provide a structured way to analyze past network performance while considering future changes. This approach may support more informed decision-making by allowing comparisons between previous adjustments and their effects, helping to predict potential outcomes of planned modifications. Additionally, using historical data may assist in identifying recurring patterns or inefficiencies, which may contribute to a more adaptive and responsive network management process over time.

According to some embodiments, the semantic knowledge graph models one or more of geographic constraints, environmental conditions, mathematical or physical rules and laws, technical data needed for the operation of the mobile communication network, and infrastructure characteristics of the of the telecommunication domain and/or the mobile communication network and its coverage area. Thus, the semantic knowledge graph may represent a very large number of required factors related to the mobile communication network. By incorporating diverse types of contextual and operational data, the semantic knowledge graph may support a more comprehensive understanding of the network's constraints and dependencies. This approach may help in making more informed decisions regarding network deployment, configuration adjustments, and optimization strategies. For example, modeling environmental and geographic factors could assist in selecting suitable locations for infrastructure while considering physical limitations. Additionally, integrating mathematical and technical rules may improve the accuracy of network simulations, potentially leading to better predictions of network behavior under various conditions.

According to some embodiments, the semantic knowledge graph comprises at least one of
- inventory data describing physical and logical elements of the mobile communication network and relations among those elements,
- policies representing intended behaviors or constraints for network operation,
- geographic information describing topological, environmental, and infrastructural characteristics of the network coverage area,
- timing, versioning, and sensitivity information associated with network elements, and
- metadata linking semantic relationships between the network elements and also the elements of the Knowledge Graph.

Thus, the semantic knowledge graph may include various types of data related to the mobile communication network. By structuring diverse network-related data within a semantic knowledge graph, the system may enable a more organized and efficient way of managing and analyzing network operations. Representing inventory data along with operational policies may assist in automating configuration adjustments while ensuring compliance with predefined constraints. Geographic information may help optimize infrastructure planning and automatic optimizations by considering environmental and topological factors, while metadata and semantic relationships may enhance reasoning processes by linking relevant data points in a meaningful expressive way. This may contribute to improved decision-making and adaptive network management over time.

According to some embodiments, the runtime data associated with the semantic knowledge graph is collected in real-time from network elements, including at least one of base stations, cells, antennas, or user devices. By continuously collecting real-time data from different network elements, the system may enable a more responsive and adaptive network management approach. This may support timely detection of performance changes, network faults, or shifting traffic patterns, which may help in making informed operational and optimization decisions. Additionally, integrating real-time data with the semantic knowledge graph may improve predictive analytics, allowing the system to anticipate potential issues and proactively adjust network configurations.

According to some embodiments, the runtime data associated with the semantic knowledge graph comprises at least one of KPIs, fault data, or user feedback. By incorporating KPIs, fault data, and user feedback into the semantic knowledge graph, the system may provide a more comprehensive understanding of network performance. This may support more accurate performance analysis, allowing for faster identification of network issues and optimization opportunities. Additionally, integrating user feedback may help align network adjustments with actual service quality perceptions, which may contribute to improved reliability and user experience.

According to some embodiments, associating the semantic knowledge graph with runtime data of the mobile communication network comprises at least one of
- collecting, structuring, and analyzing runtime data from network elements, including base stations, cells, antennas, or user devices,
- transforming the collected runtime data into graph-compatible representations by creating nodes and edges with associated metadata,
- linking the runtime data to existing nodes in the semantic knowledge graph based on predefined policies and contextual relationships, and
- continuously updating the semantic knowledge graph in real-time using application programming interfaces (APIs) or data streaming mechanisms to maintain synchronization with the mobile communication network.

By structuring and integrating runtime data into a semantic knowledge graph, the system may enhance network management by providing a more organized and dynamic representation of real-time conditions. Transforming raw data into graph-compatible representations might improve the system's ability to detect patterns and relationships among network elements, which could support more efficient decision-making. Additionally, real-time updates through APIs or data streaming mechanisms may help maintain an up-to-date view of the network, enabling faster adaptation to changing conditions and more accurate performance optimizations.

According to some embodiments, operational and optimization decisions derived from the semantic knowledge graph are applied to the mobile communication network using a configuration management interface. This interface may facilitate the application of changes by allowing the system to adjust network settings in response to inferred decisions. Using a configuration management interface to apply optimization decisions may help streamline network adjustments by providing a structured and automated approach. This may reduce the need for manual intervention, potentially allowing the network to adapt more efficiently to changing conditions. Additionally, by ensuring that decisions derived from the semantic knowledge graph are systematically implemented, the network may achieve improved consistency in its performance adjustments, which could contribute to enhanced reliability and service quality. According to some embodiments, analyzing the impact of the implemented network changes includes identifying deviations between expected and actual performance metrics of the mobile communication network. Thus, analyzing the impact of network changes may involve comparing expected performance metrics with actual performance data from the mobile communication network. This process may help identify any differences that arise after implementing adjustments. By detecting deviations between expected and actual performance, the system may support a more data-driven approach to network optimization. This may allow for quicker identification of unintended effects, enabling timely refinements to network configurations. Additionally, continuous monitoring of performance metrics may contribute to more adaptive network management, which could help maintain stable service quality over time.

According to some embodiments, updating the semantic knowledge graph includes incorporating new semantic relationships, abstractions, concepts, or metadata derived from observed interactions within the mobile communication network. This process may help refine the graph's structure and improve its representation of network conditions. By continuously incorporating new relationships and contextual data, the semantic knowledge graph may evolve to reflect the changing dynamics of the network more accurately. This may support more precise reasoning and decision-making by ensuring that optimizations are based on the most up-to-date information. Additionally, adapting the graph over time may help improve predictive capabilities, which may allow the system to anticipate network issues and suggest proactive adjustments.

According to some embodiments, the method further includes using machine learning to update the semantic knowledge graph. Updating may include identifying patterns and correlations in runtime data and optimization outcomes and adapting semantic relationships or metadata to refine subsequent decision-making. The updating process may involve recognizing patterns and correlations in runtime data and optimization outcomes, as well as modifying semantic relationships or metadata to enhance future decision-making. By leveraging machine learning, the system may improve its ability to detect trends and dependencies within network data, which could contribute to more effective optimizations over time. Automatically adapting semantic relationships and metadata may allow the knowledge graph to reflect real-world network behavior more accurately, supporting better-informed decisions. Additionally, continuous learning from past optimizations may help refine predictive capabilities, which could enable more proactive network management.

According to some embodiments, reasoning on the semantic knowledge graph comprises at least one of
- traversing the knowledge graph to identify information from nodes and edges relevant to a contextual situation or network optimization objective,
- applying at least one of deductive, inductive, or abductive inferences based on semantic concepts, structured taxonomies, relationships, and constraints stored in the graph to derive decisions,
- evaluating predefined policies and constraints in the graph to ensure compliance with operational, technical or other types of requirements, and
- resolving conflicts among proposed results using prioritization or optimization algorithms to produce a feasible solution.

By enabling structured reasoning within the semantic knowledge graph, the system may provide a more intelligent and context-aware approach to network operation and optimization. Extracting relevant information through graph traversal might support more precise decision-making, while applying logical inference techniques could allow the system to derive meaningful conclusions based on existing knowledge. Evaluating operational constraints may help ensure that decisions align with predefined policies, and the ability to resolve conflicting proposals might contribute to more efficient and balanced network adjustments. These capabilities may support a more autonomous and adaptive network management process.

According to some embodiments, the operational or optimization decisions derived from the semantic knowledge graph include at least one of:
- modifying network configurations,
- adjusting network parameters,
- proposing new network cell site deployments,
- remediating problems or incidents,
- optimizing service quality, or
- introducing new services.

Thus, the operational or optimization decisions derived from the semantic knowledge graph may include one or more of the following: modifying network configurations, adjusting network parameters, suggesting new cell site deployments, addressing network issues or incidents, improving service quality, or facilitating the introduction of new services. By deriving decisions from a structured semantic knowledge graph, the system may enhance the efficiency of network management by providing data-driven recommendations. Adjusting configurations and parameters based on inferred insights may allow for more adaptive performance tuning, while identifying suitable locations for new cell sites could contribute to improved network coverage and capacity. Additionally, automating problem remediation and service quality enhancements may help maintain more reliable and robust network operations, and incorporating new services dynamically could support evolving technological advances and market needs, for examples Services leveraging uRLLC (Ultra reliable low latency communications) Network Slices are available with 5G.

According to some embodiments, the method further includes analyzing and validating the decisions using a simulation framework before applying the decisions to the mobile communication network. This process may help assess the potential impact of changes in a controlled environment. By using a simulation framework to validate decisions before applying them, the system may reduce the risk of unintended network disruptions. This may allow for testing different configurations and adjustments in a virtual setting, helping to identify potential issues before the application to the real system. Additionally, performing simulations might improve decision accuracy by providing insights into how changes could affect network performance, which may contribute to a more stable and reliable network management process.

According to some embodiments, an impact of the implemented network changes is analyzed by comparing updated runtime data to intended performance outcomes of the mobile communication network. This comparison may help determine whether the implemented adjustments align with intended operational goals. By systematically analyzing the effects of network changes, the system may provide a more data-driven approach to performance optimization. Comparing real-time data with expected outcomes may help detect deviations, allowing for timely adjustments if necessary. Additionally, this may support continuous network improvement by refining future optimization strategies based on observed results, which could contribute to more efficient and adaptive network management.

According to some embodiments, the method further includes integrating multiple knowledge graphs representing different domains of the mobile communication network, including at least one of core networks, transport networks, or global networks. By combining multiple knowledge graphs, the system may enhance its ability to model complex interdependencies across different network domains. This may facilitate more holistic optimizations by considering factors that span multiple layers of the network infrastructure. Additionally, integrating diverse knowledge sources may improve coordination between network components, potentially leading to more efficient resource allocation and better adaptability to changing network conditions.

According to some embodiments, the semantic knowledge graph comprises multiple connected or connectable subgraphs, each representing a specific aspects, areas or domains of the mobile communication network, including at least one of:
- an inventory graph representing physical and logical elements of the network;
- a policy graph representing operational policies and constraints;
- a performance graph representing runtime data, including key performance indicators and fault data; and
- a geographic graph representing environmental and infrastructural constraints,
- wherein the subgraphs are interoperable and connected through consistent semantic relationships.

By structuring the semantic knowledge graph into distinct but interconnected subgraphs, the system may provide a more modular and scalable approach to network management. This organization may allow for more efficient data retrieval and reasoning, as each subgraph may focus on a specific aspect of network operations while still being linked to other relevant domains. Additionally, maintaining consistent semantic relationships across subgraphs might help ensure accurate cross-domain analysis, which could support more precise optimization decisions and better coordination of network resources.

According to some embodiments, the semantic knowledge graph is enhanced by automatically creating helping entities for example based on fault and performance data, which are analyzed to identify patterns and dependencies, and/or inferences derived from machine learning models, including revealed relationships, confounding factors, or hypotheses. The helping entities may be integrated into the semantic knowledge graph to relate and evaluate entities that are otherwise non-directly exploitable, and wherein the additions are consistent with a predefined data model of the graph. Thus, the semantic knowledge graph may be expanded by automatically generating additional entities, referred to as helping entities. For this, fault and performance data may be analyzed to detect patterns and dependencies within the network, and/or machine learning models may derive inferences, identify relationships and/or confounding factors, or form hypotheses about network behavior. These helping entities may be integrated into the knowledge graph to establish connections between elements that would otherwise not be directly linked. Additionally, the newly added entities and relationships may follow a predefined data model to maintain consistency within the graph structure. By incorporating automatically generated helping entities, the semantic knowledge graph may improve its ability to model complex network behaviors and dependencies. Detecting patterns from fault and performance data could allow for more proactive issue resolution, while machine learning-based inferences might help uncover hidden relationships that impact network operations or performance. Additionally, ensuring that these additions follow a structured data model may help maintain the reliability and coherence of the graph, supporting more effective decision-making and network optimization.

According to some embodiments, the semantic knowledge graph is used to resolve conflicts between any decisions proposed by different subsystems or agents of the mobile communication network, and wherein resolving conflicts comprises at least one of:
- identifying conflicting results by analyzing semantic relationships in the knowledge graph, including dependencies and constraints between network elements represented as nodes and edges,
- prioritizing the conflicting decisions based on predefined policies stored in the knowledge graph, including cost, resource availability, quality, business and performance impact,
- calculating a combined optimization solution that satisfies the predefined policies and minimizes conflict by using reasoning techniques performed on the semantic knowledge graph; and
- updating the mobile communication network based on the calculated combined optimization solution.

By leveraging the semantic knowledge graph to resolve conflicts, the system may improve decision-making consistency across different network management subsystems. Identifying conflicts through semantic relationships could help prevent among others unintended disruptions caused by overlapping or incompatible optimizations. Prioritizing decisions based on predefined policies may ensure that network adjustments align with operational goals, resource constraints, and performance requirements. Additionally, calculating a combined optimization solution using structured reasoning might contribute to a more efficient and harmonized network management process, ultimately leading to improved service quality and resource utilization.

According to some embodiments, the semantic knowledge graph is employed by an artificial intelligence (AI) component to enable the mobile communication network to autonomously adapt to changes in its operational environment. The method may further include
- detecting changes in the operational environment based on runtime data collected from the network, including key performance indicators, fault data, and external contextual information;
- optionally updating semantic relationships in the knowledge graph to reflect the detected changes, including adjustments to node properties and edges representing dependencies, constraints, and operational parameters;
- performing reasoning on the knowledge graph to derive adaptive decisions; and
- automatically implementing the adaptive decisions in the mobile communication network to adjust configurations, reallocate resources, or modify network parameters in near real-time.

Graph structures bear innate mathematical and therefore IT (Al-) usable evaluation possibilities to incorporate all data for well-educated autonomous decision-making. Graphs may allow mathematical (logical) operations and thus the possibility for IT and Al systems to incorporate all data for well-educated autonomous reasoning and decision-making. By integrating Al with a semantic knowledge graph, the system may enhance the autonomous adaptability of the mobile communication network. Detecting and analyzing runtime data could allow for a more dynamic response to network conditions, reducing reliance on manual intervention. Updating the knowledge graph to reflect changing constraints might help improve decision accuracy by ensuring that optimization actions consider real-time network dynamics. Additionally, automatically applying adaptive decisions may contribute to more efficient resource management, potentially leading to improved network performance and service reliability.

Embodiments of the method for managing a mobile communication network using a semantic knowledge graph may be implemented as a computer-implemented method executed by one or more computing devices.

According to a further aspect of the present disclosure, it is provided an apparatus for managing a mobile communication network using a semantic knowledge graph. The apparatus comprises processing circuitry which is configured to model the mobile communication network and telecommunication domain knowledge as a semantic knowledge graph, wherein the semantic knowledge graph represents data describing an ontology of the mobile communication network and the telecommunication domain knowledge The ontology includes structured concepts, taxonomies, relationships, and constraints, and is configured to enable logical operations for inference. The processing circuitry is further configured to obtain runtime data from the mobile communication network and correlate the runtime data with the semantic knowledge graph to perform reasoning, derive optimization decisions, and implement network changes based on the derived decisions.

Optionally, the processing circuitry may be further configured to analyze an impact of the implemented network changes on the performance of the mobile communication network and to update the semantic knowledge graph based on the analyzed impact.

### Brief description of the Figures

Some examples of apparatuses and/or methods will be described in the following by way of example only, and with reference to the accompanying figures, in which
- Fig. 1: illustrates a flowchart of a method for managing a mobile communication network according to an embodiment;
- Fig. 2: illustrates a schematic representation of a radio network layering concept, showing relationships between frequency layers, priority settings, and configuration parameters;
- Fig. 3: illustrates a semantic knowledge graph representation of frequency characteristics, network topology, and regulatory constraints, illustrating dependencies and interactions;
- Fig. 4: shows a generic system architecture for managing a mobile communication network, depicting the interaction between human/Al components, analytics, inventory, policy management, and real network elements;
- Fig. 5: shows data/process flow implementation showing how various system components interact, including knowledge graph updates, analytics, simulation-based validation, and policy enforcement; and
- Fig. 6: illustrates a workflow for automated cell planning, illustrating how predefined constraints, optimization strategies, and real-time evaluations contribute to network configuration adjustments.

### Detailed Description

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e. only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

The following provides definitions and explanations of concepts, terminologies, and principles related to telecommunication networks, knowledge graphs, reasoning methodologies, and network optimization, which may serve as a reference for understanding the technical background of a semantic knowledge graph-based network management system.

Policy: a set of rules that are used to manage and control the changing and/or maintaining of the state of one or more managed object. Intent is a simplified declarative goal policy (John Strassner, 2003)

Intent Based: "Intelligent software understands the user goals and translates them automatically into a concrete prescription of service or network configuration (Dave Lenrow, 2015)

Knowledge Graphs: KGs formally represent semantics by describing entities (objects, events, situations, concepts...) and their interlinked relationships. KGs may make use of ontologies as a schema layer, allowing logical inference for retrieving implicit knowledge rather than only allowing queries requesting explicit knowledge.

Ontology: Ontologies encompass a representation, formal naming, and definitions of the categories, properties, and relations between the concepts, data, or entities that pertain to one, many, or all domains (Dale Jacquette, 2002)

Telecommunication domain: Plan, build and operate telecommunication systems and networks, including all related or potentially related physical, technical, service, standardization, legal, business, human, Al etc. knowledge, interactions and aspects.

Taxonomy: Classification and categorization for organizing concepts or items into structures, including schemes of classes (a taxonomy) and the allocation of things to the classes.

Semantic: Meaning and sense of something, including ideas and concepts associated with it.

Reasoning: The capacity and process of forming conclusions, judgments, or inferences based on new or existing data or premises via the application of logic with the aim of seeking the truth. Human Reasoning can be influenced by "feelings" (for good or bad).

Deductive reasoning: Drawing valid inferences/conclusion which follow necessarily from the stated premises. (meaning that it is impossible for the premises to be true and the conclusion to be false). In simple words: Infer from the general to the specific.

Inductive reasoning: Producing properties or relations about other/unobserved objects or types based on previous observations or experiences, or that formulates general statements or laws based on limited observations of recurring phenomenal patterns. In simple words: Infer from the specific to the general.

Abductive reasoning: A hypothetical, probabilistic, most likely logical inference or conjecture, plausible but unproven, for a specific topic based on limited data. In simple words: best guessing

Confounder: A variable that influences both the independent and dependent variables, creating a false impression of a relationship between them.

(Radio) Coverage: The extent to which a telecommunication service is available across a geographic area or population.

(Radio) Capacity: The maximum data throughput or communication capability of a radio system or channel under given conditions.

Geographic constraint: Limitations imposed on telecommunication systems or services, such as mountains, cliffs, canyons, (high) trees, buildings etc.

Environmental conditions: Impacting factors such as rain, fog, dust etc.

Infrastructural characteristics: Influencing factures for special consideration such as roads, highways, railways; dense areas like city centers and stadiums; technical constructions like backbones or fiber cables (mostly in the ground); depending on the context also security/military areas and/or geographic constraints.

Sensitivity: The degree or weighting to which a system/model/node/subgraph/etc. is prone/amenable/receptive to variations (e.g. in relations, parameters, changes, assumptions etc.).

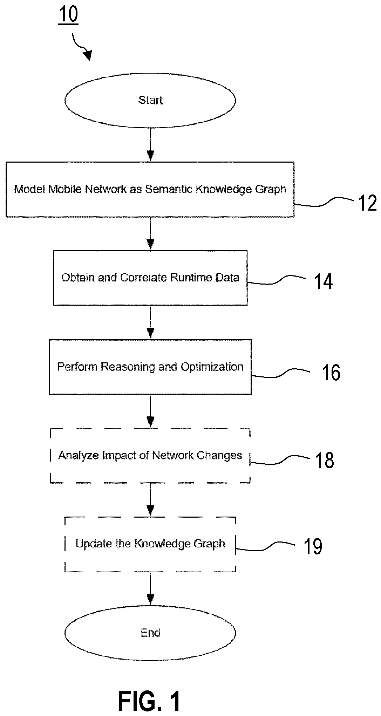

**Fig. 1** illustrates a flowchart of a method 10 for managing a mobile communication network according to an embodiment. The method may be a computer-implemented method, executed by one or more computing devices, such as servers, cloud-based systems, or network management platforms. The computing systems may be programmed to model the mobile communication network and its associated domain knowledge as a semantic knowledge graph (KG), obtain runtime data, perform reasoning, and optimize network performance based on analyzed impact. The method may rely on artificial intelligence algorithms, machine learning techniques, and rule-based reasoning to automate network management tasks, reducing a need for manual intervention. A system implementing this method may be deployed in centralized data centers, distributed cloud environments, or edge computing nodes within the network infrastructure.

Mobile communication networks have evolved significantly over time, from early first-generation (1G) analog cellular networks, which primarily supported voice communication, to second-generation (2G) digital networks, which introduced text messaging and basic data services. Third-generation (3G) networks enabled higher data speeds and mobile internet access, while fourth-generation (4G LTE) networks enhanced broadband capabilities, supporting video streaming and low-latency applications. Fifth-generation (5G) networks have further advanced mobile communications by offering ultra-fast speeds, low latency, and support for massive machine-type communication, enabling the Internet of Things (IoT) and smart city applications. Future mobile networks, including 6G and beyond, are expected to incorporate even more advanced Al-driven optimizations, seamless integration with satellite communications, and real-time adaptability through dynamic network slicing.

Method 10 includes modeling 12 the mobile communication network and telecommunication domain knowledge as a semantic knowledge graph representing data describing an ontology of the mobile communication network and the telecommunication domain knowledge, the ontology including structured concepts, taxonomies, relationships, and constraints, wherein the semantic knowledge graph is configured to enable logical operations for inference.

Telecommunication domain knowledge may refer to specialized understanding and structured information related to design, operation, and management of communication networks, including mobile, fixed-line, and satellite systems. This knowledge may encompass technical, regulatory, "experience and expertise" (learnings from previous engagements in this activity) and operational aspects necessary for ensuring efficient communication between devices, users, and infrastructure components. In a mobile communication network, telecommunication domain knowledge may include details about network architectures, such as how RANs, core networks, and transport networks interact, including data center, edge computing and cloud operations of Information Technology and Network Technology systems. It may also involve understanding network protocols like LTE, 5G NR (New Radio), protocol stacks and IP-based communication standards, which define how data is transmitted and managed across different layers of the network. Additionally, this knowledge may include radio frequency (RF) planning, spectrum allocation, and interference management, which are essential for ensuring optimal network coverage and performance. Telecommunication domain knowledge may also incorporate quality of service (QoS) mechanisms, traffic engineering principles, and handover strategies, which allow mobile users to move seamlessly between different network cells without losing connectivity. For example, a mobile network operator's knowledge base may include rules for assigning priority levels and Traffic Categories to different types of data traffic, ensuring that voice calls are given higher priority than background data downloads. Another example is in network optimization, where machine learning algorithms can analyze signal strength, congestion levels, and user mobility patterns to make real-time adjustments to improve network performance. Beyond technical aspects, telecommunication domain knowledge may also include regulatory requirements, such as spectrum licensing rules set by national communication authorities. These regulations dictate how operators can deploy their networks and ensure compliance with safety, security, and fair competition standards.

Tunnels are further examples for radio domain "knowledge" integrated in the KG. These areas may not only be difficult in terms of radio wave propagation, but also for identifying and relating the measurements: Users can have a geographically similar estimated location (normally identified via triangulation), but the connecting cells and configurations impacting the KPIs are completely different for users inside or outside the tunnel. The positions and thus trajectory of user (re-)connections to the network can indicate the tunnel usage, given that the change in time and position reveals the movement speed, which in term can only be realized via the tunnel (overcoming a mountain at the same speed is not possible). The semantically modeled geographic circumstances and radio optimization considerations in the KG enable better and more automated technical solutions, especially in the combination with measured KPIs and applied configuration changes. In an example implementation, the KG may be used by Al to understand the context, infer and improve the network via decided configuration changes. In an example implementation, a Service Management and Orchestration (SMO) and/or RAN Application (rApp) is using the KG to understand the context, infer and improve the network via decided configuration changes.

A semantic knowledge graph may be a structured representation of information that organizes data in a way that allows for meaningful relationships between different entities. Unlike traditional databases that store data in rigid tables, a semantic knowledge graph may represent information as nodes (entities) and edges (relationships) in a connected graph structure, which allows easy, fast and dynamic modifications and traversing and querying any data in the graph, enabling context-aware reasoning and inference. In the context of a mobile communication network, a semantic knowledge graph can model various network components, such as base stations, antennas, user devices, frequency layers, and policies, and define how these components interact. Each entity in the graph may be enriched with semantic meaning, meaning that relationships between elements are not just raw links but may have defined meanings, such as "connected to," "prioritized over," or "dependent on", preferably with precise and distinguishable expressions. Several and/or bi-directional connections are also possible. This may enable the system to infer new knowledge (in terms of "findings") based on existing relationships and improve network management decisions. For example, in a mobile network, the graph may contain information that a certain base station (Node A) has a neighbor relation with another base station (Node B) via a specific frequency band. If network congestion is detected at Node A, the knowledge graph can help determine whether traffic should be redirected to Node B or another nearby base station based on predefined rules and real-time conditions. Additionally, the graph may store information about network policies, such as prioritizing emergency calls over regular data traffic, ensuring that critical communications are not disrupted. By continuously updating relationships, adding new contextual information, and performing reasoning, a semantic knowledge graph enables more autonomous and intelligent decision-making, making it a powerful tool for managing complex, dynamic systems like mobile communication networks.

An ontology in the context of a mobile communication network may be a structured way of organizing knowledge about the network, ensuring that different components, their properties, and their relationships are well-defined. It may serve as a formal representation that helps machines understand how various elements within the network interact and depend on each other.

With the radio domain information semantically modelled in a graph, multifarious aspects may be taken into account before applying a solution. The more complete the knowledge graph, the better the outcome, as long as the ontologies are accurately represented and exploitable. This means the information in the graph must be relatable to the physical and logical entities and configurations which constitute a radio network. These relations may be established in various ways, including manual or automated modelling of best practice expert know-how, for example via voice recognition and NLP/NER (Named Entity Recognition) to generate nodes and edges. Various graph-constructing techniques exist, for example manual data modelling, generative-Al supported graph creation (based on the limited data/knowledge of the Al Model), or voice recognition and NER (Named Entity Recognition) where the creation nodes end edges are based on the data recognition from the input material (such as specifications, manuals, wiki and classic databases). Preferably, several of these approaches may be combined, including result verification for best results.

Structured concepts may refer to clearly defined elements, groups, types etc that make up the network, such as base stations, antennas, frequency layers, radio connections, backhaul connections, and user devices. These concepts may be systematically categorized so that each has a specific meaning and role within the network. For example, in a mobile network, a (entire) base station may be a structured concept because it has predefined attributes such as location, frequency bands, and connectivity to other components.

A taxonomy may be a hierarchical classification system that organizes structured concepts into different levels based on their characteristics. In a mobile network, a taxonomy may classify different types of network technologies, such as cellular networks divided into 2G, 3G, 4G, and 5G. Within 5G, further classification can define subcategories like standalone (SA) and non-standalone (NSA) architectures, or various features offered by the 3GPP standard or vendor implementation.

Relationships may define how different concepts are connected and interact with each other. In a mobile communication network, a relationship may represent how a user device connects to a base station or how a base station hands off a connection to another station when the user moves. Another example is how frequency layers are prioritized for different types of data traffic.

Constraints may be rules that define limitations or conditions that must be followed within the network. The constraints may ensure that the network operates efficiently and avoids conflicts or severe problems up to dysfunction. For example, a constraint in a mobile network may specify that a particular frequency band can only be used in certain geographic regions due to regulatory restrictions. Another constraint may require that a network handover only occurs if the signal strength drops below a certain threshold, yet another example may simply be allowed cell parameter values or value ranges.

Thus, modeling 12 may involve creating a structured representation of knowledge related to a mobile communication network and its broader telecommunication domain. This representation takes the form of a semantic knowledge graph, which organizes data in a way that allows navigable relationships between among other things different network components, operational rules, general physical laws, offered services, business considerations and contextual information to be understood and analyzed. Instead of relying on conventional database structures, the semantic knowledge graph may provide an interconnected framework where all relevant aspects (of networks) and their relationships are modeled in a way that facilitates intelligent decision-making.

Modeling 12 may involve constructing a graph-based data model where nodes represent specific (abstract, logical or physical) entities within the mobile communication network, such as base stations, antennas, network slices, frequency bands, and policy rules, while edges define the relationships between these elements. Each node and edge may include metadata specifying properties such as configuration parameters, operational constraints, or dependencies. The knowledge graph is configured to support logical inference operations, meaning it can apply reasoning techniques, including deductive, inductive, or abductive logic, to analyze relationships between network elements and derive conclusions for example about network optimization or fault detection. The graph may also be continuously updated based on real-time runtime data, ensuring that network optimizations are always based on the most recent operational insights. By integrating structured taxonomies and predefined constraints, the knowledge graph enables automated and adaptive decision-making in mobile communication networks, improving efficiency and reducing reliance on manual configuration adjustments.

Method 10 further includes obtaining 14 runtime data from the mobile communication network and correlating the runtime data with the semantic knowledge graph to perform reasoning 16, derive optimization decisions, and implement network changes based on the derived decisions.

Runtime data may refer to real-time information collected from the mobile communication network as it operates. This data may include measurements such as signal strength, network congestion, dropped calls, user mobility patterns, and bandwidth usage. Since network conditions are constantly changing, runtime data may provide an up-to-date view of how different network elements, such as base stations and antennas, are performing at any given moment.

Correlating the runtime data with the semantic knowledge graph means linking the real-time network data to a structured knowledge system that represents the relationships between different network components. The knowledge graph provides the "understanding" and acts as a map of the network, storing information about how different aspects and elements interact and what configurations are possible or even optimal. By comparing real-time performance data with this structured knowledge, the system can identify patterns, anomalies, or potential issues, allowing for a more intelligent and automated approach to network management.

Reasoning may be a process of analyzing the correlated data to draw (logical) conclusions and make informed decisions about the network. Using logical inference, machine learning, or predefined rules, the system can detect patterns, problems, predict future network behavior, and suggest improvements. For example, if a base station is experiencing high congestion, reasoning might involve determining whether nearby base stations have available capacity or whether users should be redirected to different frequency bands to balance network load, whereas also other factors in the graph might be of relevance.

Optimization decisions may be actions taken based on the reasoning process to improve network performance. These decisions may include adjusting transmission power, changing frequency allocations, modifying handover policies, or reconfiguring network routes to enhance coverage and reduce congestion. Instead of relying on manual intervention, the system can automatically implement these optimizations in real time.

Thus, obtaining 14 runtime data may involve gathering real-time operational data from the mobile communication network and integrating this data into a structured knowledge representation. By correlating this runtime data with the semantic knowledge graph, the system can analyze relationships, identify patterns, and derive meaningful insights that help in managing and optimizing network performance. This process allows for automated reasoning that supports decision-making, enabling the system to adapt dynamically to changes in network conditions and make informed adjustments without requiring manual intervention.

Obtaining 14 may include retrieving runtime data from various network elements, such as base stations, antennas, or user devices, and aligning this data with the structured information stored in the semantic knowledge graph. The correlation process may involve mapping the incoming data to predefined network entities, relationships, and policies, allowing the system to evaluate operational constraints, assess performance trends, and identify potential inefficiencies. By leveraging reasoning techniques, the system can infer optimization decisions that improve network efficiency, such as adjusting resource allocations, modifying configurations, or recommending changes to enhance coverage and service quality. Once the decisions are derived, they can be implemented in the network to ensure that real-time adjustments align with the overall network strategy.

Obtaining 14 runtime data may involve ingesting runtime data from telemetry systems, network monitoring tools, and performance logs, which may include KPIs, signal strength measurements, fault reports, and congestion levels. This data may be processed and linked to the semantic knowledge graph, where nodes may represent network elements, edges may define their relationships, and metadata may capture operational parameters. The system may apply logical inference techniques, such as deductive, inductive, or abductive reasoning, to evaluate network performance against predefined policies and historical trends. Based on this analysis, optimization algorithms may determine the most effective network adjustments, which may include modifying frequency allocations, dynamically rerouting traffic, fine-tuning transmission power, or deploying additional network resources. These optimizations may then be automatically implemented through configuration management interfaces or orchestration platforms, ensuring that network performance continuously adapts to real-time conditions.

Optionally, method 10 may include analyzing 18 an impact of the implemented network changes on the performance of the mobile communication network. Analyzing 18 may involve assessing how changes made to the mobile communication network affect its overall performance. This process may allow the system to evaluate whether adjustments improve network efficiency or introduce unintended issues. By continuously analyzing the impact of modifications, the system may refine its decision-making processes and ensure that network operations remain optimized over time. Analyzing 18 may include comparing actual network performance following an implemented change against expected outcomes. This may involve evaluating various performance indicators, such as signal quality, data throughput, latency, or network stability, to determine whether the changes achieve the intended improvements. The system may also identify discrepancies between anticipated and actual results, helping to detect inefficiencies or potential failures. This analysis may provide feedback that may guide further optimization efforts to enhance network reliability and efficiency. Analyzing 18 may involve collecting and processing runtime performance data from network elements, such as base stations, antennas, and user devices, following a network configuration change. The system may retrieve KPIs, fault logs, and user experience metrics to assess deviations between the expected and actual impact of the changes. Machine learning models, statistical analysis, or rule-based reasoning techniques may be applied to detect performance degradation, anomalies, or suboptimal configurations. If the analysis reveals inconsistencies, the system may trigger further network optimizations, such as adjusting transmission power, re-allocating frequency bands, or modifying network topology, ensuring that the mobile communication network continuously adapts to changing conditions.

Further optionally, method 10 may include updating 19 the semantic knowledge graph based on the analyzed impact. Updating 19 may involve refining the semantic knowledge graph by incorporating new insights gained from analyzing the effects of previously implemented network changes. This may ensure that the knowledge graph remains an up-to-date representation of the mobile communication network, allowing it to support more accurate reasoning and decision-making for future network optimizations. By continuously updating the graph, the system may adapt to dynamic network conditions and improve its ability to manage the network autonomously. Updating 19 may include modifying the semantic relationships, metadata, or node properties within the knowledge graph based on the results of network performance analysis. If a network change produces the expected improvement, the graph may be updated to reflect the effectiveness of that particular optimization. If unexpected performance issues arise, the system may adjust the relationships within the graph to account for new dependencies, constraints, or influencing factors. This updating process 19 may ensure that the knowledge graph reflects real-time network conditions, historical trends, and learned optimizations, making it a more reliable tool for guiding future network adjustments. The updating process 19 may involve integrating new data points, adjusting relationships, and refining structured taxonomies within the semantic knowledge graph. Nodes representing network elements, such as base stations, antennas, or network slices, may have their attributes updated to reflect changes in performance metrics, fault history, or environmental constraints. Edges defining dependencies between different network components may be restructured to account for newly discovered relationships, such as interference patterns or capacity limitations. Automated machine learning models or rule-based inference engines may be employed to validate these updates and ensure consistency with the predefined data model. This continuous updating process 19 may allow the knowledge graph to serve as an adaptive, self-learning representation of the mobile communication network, supporting more precise optimizations and autonomous decision-making.

The method 10, as described, may provide a structured approach to managing a mobile communication network by leveraging a semantic knowledge graph. The method may enable dynamic network operations and optimization by integrating real-time runtime data, performing reasoning, and continuously updating the knowledge graph based on analyzed network performance. One aspect of this approach may be the ability to model and manage radio network layering concepts, which may ensure efficient spectrum utilization, seamless handovers, and prioritized connectivity across different network technologies, such as 4G, 5G, and future 6G networks. By representing radio network layers, priority settings, and configuration rules as interconnected entities within a knowledge graph, the system can derive dynamic adaptations, locally different yet overall consistent configurations and optimization decisions that align with general policies and operational constraints.

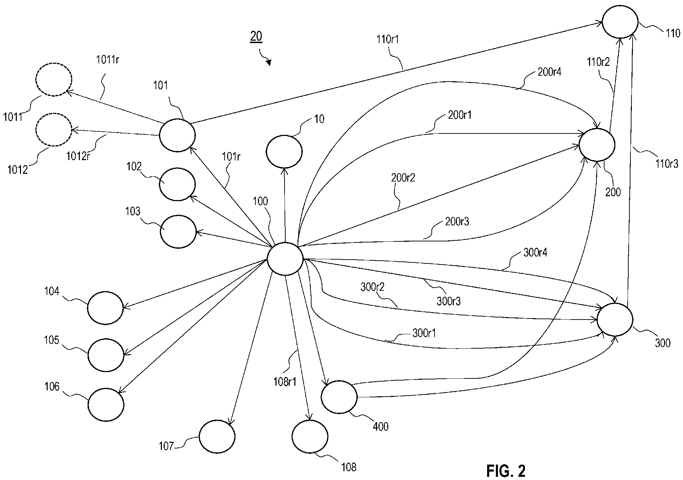

**Fig. 2** provides a schematic representation of how the knowledge graph may model network layering principles, illustrating the relationships between frequency layers, priority configurations, and their impact on network performance. Fig. 2 schematically illustrates a knowledge graph representation 20 of a radio network layering concept, specifically detailing frequency layers, priority settings, configuration indications, and relations between different network components. The depicted nodes and relationships represent structured network knowledge that facilitates automated decision-making regarding network layer selection, prioritization, and configuration adjustments, including the generation of a valid network layering configuration which can be applied to the real network.

Frequency layers may refer to the different bands of radio frequencies used in a mobile communication network. These layers may determine how signals are transmitted between mobile devices and network infrastructure, such as base stations. Lower frequency layers, such as those in a 700 MHz range, can travel long distances and penetrate buildings effectively, making them useful for wide-area coverage. Higher frequency layers, such as millimeter-wave bands in 5G, may provide much higher data speeds but have a shorter range and require more network densification. Mobile operators may allocate different frequency layers to balance coverage and capacity, ensuring that users in rural areas receive reliable connectivity while urban users benefit from high-speed data transmission.

Priority settings may define rules that determine which network connections or services should receive preferential treatment. In a mobile network, priority settings may be used to manage different types of traffic, such as voice calls, video streaming, or emergency communications. For example, if a network is congested, an emergency call may be prioritized over a social media video upload to ensure critical communications are not interrupted. Similarly, business customers with premium service plans may receive higher priority for data connections compared to regular consumers. This may ensure that network resources are allocated efficiently based on predefined policies.

Configuration indications may provide instructions or conditions that guide how network elements should behave under specific circumstances. These indications may help automate network management and allow the system to adjust settings dynamically. For example, a configuration indication might specify that a mobile device should switch to a different frequency layer when the signal strength drops below a certain threshold. Another configuration indication may define whether a device should use carrier aggregation, which allows it to connect to multiple frequency bands simultaneously for improved performance. These settings help optimize the network to provide seamless connectivity without requiring manual intervention.

Relationships between different network components may describe how various elements in the network interact and depend on each other. These relationships may include connections between base stations and mobile devices, dependencies between frequency layers, and the way different network nodes communicate to maintain stability. For example, when a user moves from one location to another, the mobile network must ensure a smooth handover from one base station to another without dropping the call or data session. Another example is how small cells in dense urban areas complement macro cells by offloading traffic, improving overall network performance. By modeling these relationships in a semantic knowledge graph, the system can analyze, predict, and optimize network behavior dynamically, leading to more efficient and adaptive mobile communication networks.

At the center of Fig. 2, node 100 represents a frequency layer of a source cell, which is connected to other network elements to define priority settings and target layers. Node 101 may correspond to a generic priority setting for Idle mode, which may be further associated with vendor-specific configuration parameter nodes, including nodes 1011 and 1012. A relation 101r may define idle mode priority relationship.

Node 102 may indicate a generic configuration when no cell reselection should be performed, whereas node 103 may represent a generic configuration for cell reselection target cell configurations. These nodes may contribute to a decision-making process regarding when and how network elements should transition between different frequency layers.

The graph representation 20 in Fig. 2 also illustrates target layer cells, where node 200 may represent a 4G target layer cell, and node 300 may represent a 5G target layer cell. Although not explicitly shown in Fig. 2, the structure can be extended to incorporate 6G target layers using similar principles, unless otherwise indicated by 6G specifications. Several relations may be defined between these layers to indicate prioritization criteria. Relation 200r1 may specify 4G Idle Mode Priorities, with attributes that define priority ranges and fallback mechanisms. Relation 200r2 may govern 4G Connected Mode Priorities for data, while relation 100-200r3 may specify 4G Connected Mode Priorities for voice, ensuring that different traffic types can be handled appropriately. Similarly, relation 300r1 may represent 5G Idle Mode Priorities, relation 300r2 may manage 5G Connected Mode Priorities for data, and relation 300r3 may be responsible for 5G Connected Mode Priorities for voice. Each of these relations may carry attributes that define priority ranges, ensuring consistent and optimized network performance across different configurations.

Further detailing carrier aggregation (CA) configurations, Fig. 2 illustrates node 104, which may represent a carrier aggregation PCC configuration with specific attributes for 4G and 5G (NSA_PCC). CA is a feature introduced in LTE-Advanced (Release 10) that allows mobile networks to combine multiple frequency bands to increase data rates and overall network capacity. In this context, a Primary Component Carrier (PCC) refers to the main frequency channel that handles all the control signaling between the user equipment (UE) and the network. The PCC is complemented by one or more Secondary Component Carriers (SCCs), which are used primarily to boost data throughput. The configuration of the PCC involves setting parameters such as frequency band, bandwidth, and other operational settings to ensure efficient communication and optimal performance. Proper PCC configuration may manage the core control functions, while the SCCs may enhance data transmission capabilities. Node 104 is linked to node 105, which may define target cell configurations for CA, and node 106, which may indicate whether CA should be disabled. The relations 200r4 and 300r4 may define generic relation conditions for 4G CA and 5G CA, specifying priority levels for aggregated carriers.

Additional configuration parameters may be included through node 107, which may provide an indication of whether E-UTRAN New Radio Dual Connectivity (EN-DC) anchoring should be disabled, and node 108, which represents Secondary Cell Group (SCG) targets. EN-DC is a feature in 5G networks that allows a mobile device to connect simultaneously to both 4G LTE and 5G NR networks. In this setup, the LTE base station (eNodeB) serves as the primary anchor, handling control signaling, while the 5G base station (gNodeB) acts as a secondary node, providing additional data capacity. This dual connectivity may enable devices to benefit from the widespread coverage of LTE and the high-speed capabilities of 5G, ensuring a seamless and efficient user experience. Relation 108r1 may outline SCG priority conditions, detailing how higher priority values should be assigned to higher network layers. SCG refers to a set of serving cells associated with a secondary node, typically a 5G gNodeB (gNB). The SCG includes a Primary Secondary Cell (PSCell) and may also comprise additional Secondary Cells (SCells). This configuration is part of the Dual Connectivity (DC) framework, where a UE may connect simultaneously to both a Master Cell Group (MCG), usually linked to an LTE eNodeB (eNB), and an SCG associated with the 5G gNB. The SCG may enhance data throughput and network performance by providing additional resources and higher data rates through carrier aggregation. In this context, an SCG target may refer to specific cells within the SCG that the network aims to utilize for improving the UE's connection quality and overall service experience.

Node 110 may correspond to a generic UE and its capabilities, with attributes that define compatibility parameters. The relations 110r1, 110r2, and 110r3 may provide navigable paths indicating whether a given UE may not support specific configurations. These relationships may depend on various factors, including vendor hardware strategies, modem types, operating systems, and software versions.

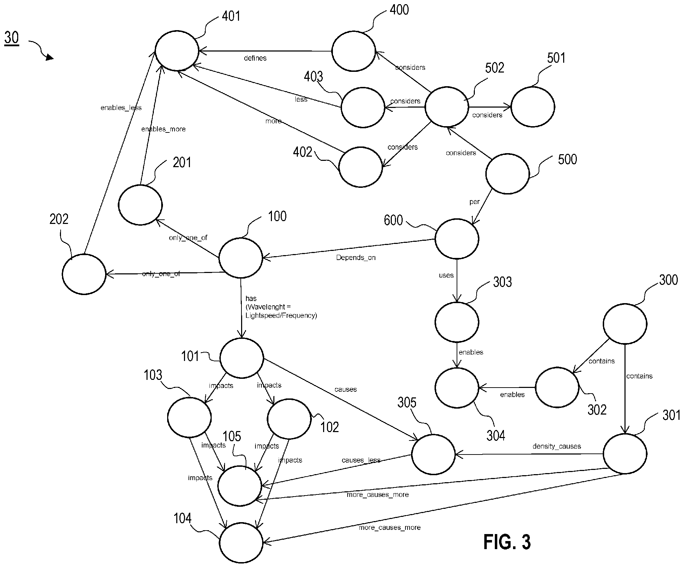

Fig. 2 also illustrates node 400, which may play a role in linking decisions to general domain knowledge. This node may enable an automatic establishment of layering configurations based on knowledge graph data. Preferably, an additional knowledge graph (not depicted) may contribute to inferring the best possible layering priorities based on regional implementation strategies. Fig. 3 can be seen as part of the additional KG with general domain and experience/expertise knowledge derived from historic configurations and its impact.

The representation of the knowledge graph 20 as an ontology model may ensure that the system can validate, analyze, improve, and apply network configurations to real-world deployments. This approach may allow for automated decision-making in network optimization, particularly in scenarios involving multi-layer frequency band allocations across various regulatory, technical, and business constraints. Real-world implementations of this knowledge graph may involve multiple instances of frequency layers, such as LTE800, LTE1800, LTE2600, NR2100, and NR3600, with each having different priorities based on coverage and capacity requirements. Fig. 2 illustrates how the semantic knowledge graph 20 may enable structured network management, priority handling, and adaptive configuration by encoding relationships between different network elements. It highlights the interoperability between different radio access technologies (4G, 5G, and future 6G layers) and their respective prioritization policies while ensuring adaptability to evolving network demands.

**Fig. 3** represents a semantic knowledge graph 30 for modeling general telecommunication know-how, frequency characteristics, network topology, and regulatory constraints in a mobile communication network. Fig. 3 is structured as a graph-based model, where nodes represent network-related aspects and edges define relationships between these aspects. The graph 30 incorporates physical and regulatory factors, radio access technologies, and network interference considerations, allowing for a structured approach to understanding and optimizing radio networks, as well as its management.

Fig. 3 shows multiple interconnected nodes, each labeled with a specific attribute relevant to the operation of a mobile communication network. Node 600 generically represents a frequency layer, similar as Node 100 from Fig. 1, which allows the combination of both graphs. Node 100 may represent frequency as a fundamental characteristic, which is directly linked to Node 101 (wavelength) through a relationship defining a mathematical dependency between them (Wavelength = Lightspeed/Frequency). Fig. 3 models explicitly and distinguishes between high-band (Node 201) and low-band (Node 202) frequencies, each represented as mutually exclusive options ("only one of"). High-band and low-band frequencies contribute differently to network coverage, interference, and capacity, impacting overall network performance. Path loss and fading (Node 102), obstacle bending and penetration (Node 103) are based on physical formulas and are all factors that influence the behavior of frequency in real-world conditions, resulting in an impact on coverage area (Node 104) and capacity (Node 105). These nodes are interconnected through relationships describing their impact on each other, where path loss and fading (Node 102) may cause lower signal strength, while obstacle penetration (Node 103) may influence coverage performance. It is to be noted that Nodes 201 and 202 may not be necessary since this information can also be derived from Nodes 100-105, however explicitly modelling high band and low band nodes as helping entities allows easier relations to other nodes, thus graph traversing and inferences.

Fig. 3 also models network topology and infrastructure through node 300 (Network Topology Inventory) and its related components. Node 301 (Base Station Location) and Node 302 (Hardware) are contained within the network topology and may define structural aspects of the mobile network infrastructure. The model further incorporates radio access technology (Node 303), which may encompass multiple generations of cellular technology, such as 4G, 5G, and 6G, and define how these technologies interact with network topology and hardware components. The knowledge graph defines how radio access technology enables certain network functionalities (Node 304) and behaviors, such as spectrum utilization and traffic handling.

Regulatory and business constraints are also modeled in the graph 30. Node 500 (Spectrum Ownership), Node 501 (Regulatory Constraints), and Node 502 (Business Constraints) may define external factors influencing how mobile networks operate. These constraints are linked to network topology, frequency allocation, and interference management, ensuring that regulatory compliance is maintained while optimizing network performance. Fig. 3 models how network deployment has to consider regional regulatory conditions and how spectrum ownership impacts frequency allocation.

Fig. 3 provides a structured framework for managing network performance, resource allocation, and regulatory compliance. By modeling how different frequency bands impact network behavior, how hardware components interact with network topology, and how regulatory constraints shape spectrum allocation, Fig. 3 allows for automated reasoning within a semantic knowledge graph. The relationships between nodes define key dependencies, such as how high-frequency bands (Node 201) enable more capacity but suffer from greater path loss (Node 102), while low-frequency bands (Node 202) offer better coverage but lower data rates. Similarly, interference (Node 305) is linked to wavelength and thus (a characteristic of) frequencies, and also antenna/base station locations and network topology, indicating that frequency planning must account for external interference sources.

The role of network traffic (Node 401) and conditions for specific geographic areas (Node 400) is also represented, with urban environments (Node 402) and rural environments (Node 403) being considered separately in terms of network deployment strategies. Specific conditions for geographic areas may include physical constraints such as mountains and buildings, as well as network constraints such as quality obligations e.g. for campus or highway (self-driving vehicles) areas. Fig. 3 illustrates how network configurations may be optimized based on the specific environment, ensuring that urban areas handle dense traffic efficiently while rural areas maximize coverage. Fig. 3 provides a comprehensive knowledge graph model that represents the key components, relationships, and constraints governing a mobile communication network. The structural relationships between frequency characteristics, network topology, and regulatory constraints enable context-aware reasoning and intelligent decision-making for optimizing network performance, ensuring compliance, and adapting to dynamic conditions. The figure serves as a foundation for an Al-driven system that can analyze network parameters, infer optimization strategies, and update configurations dynamically to enhance mobile network efficiency.

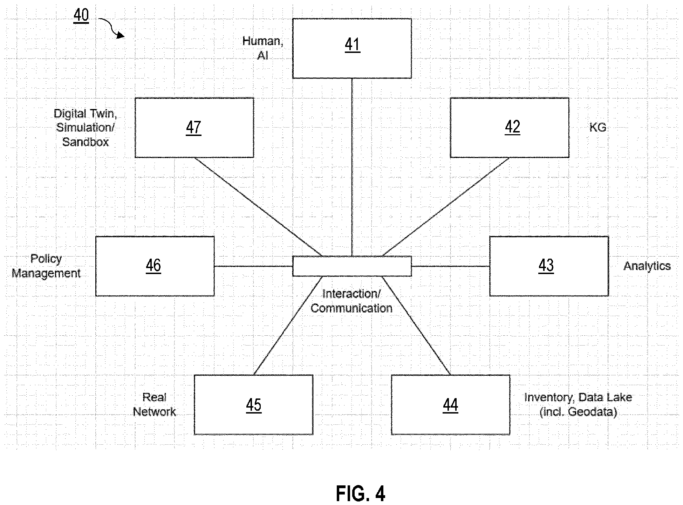

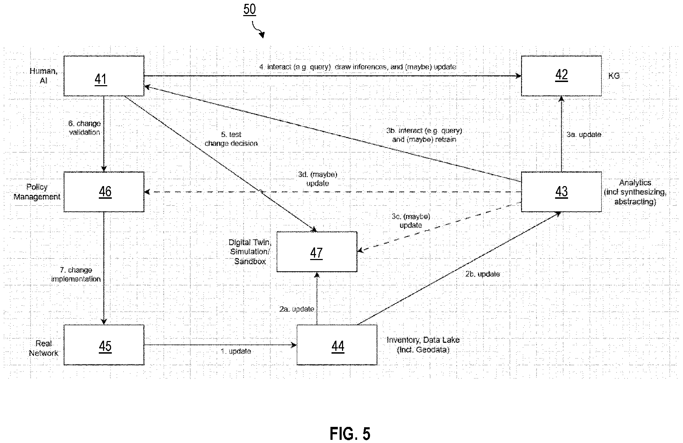

**Fig. 4** illustrates a generic system architecture for managing a mobile communication network using a knowledge-driven approach and an associated data/process flow implementation in **Fig. 5** that demonstrates how various system components interact. The figures collectively describe how network data, analytics, knowledge graphs, and simulation models may work together to optimize decision-making and policy enforcement in a mobile network. This corresponds to intelligent autonomous networks with an automated network governance and self-healing closed loop characteristics.

The generic system overview 40 comprises an interaction/communication functionality 48 that connects six primary system components: Human/Al interaction 41, a knowledge graph (KG) 42, analytics 43, inventory and data lake (including geodata) 44, real network 45, policy management 46, and a digital twin/simulation/sandbox 47 environment. Each of these components is represented as a block and is interconnected through communication functionalities 48, indicating an integrated system where each element contributes and retrieves data for decision-making. The communication functionalities 48 may serve as a coordination point that facilitates data exchange between all the components, while it may be for example implemented as message broker, it does not forcefully mean a centralized element.

The system 40 may enable intelligent decision-making for network management. The Human/Al component 41 may represent decision-makers or machine learning models that interact with the system to generate, refine, or validate optimization strategies. The knowledge graph (KG) 42 may store structured domain knowledge, enabling reasoning and inference generation. The analytics component 43 may process raw and structured data, extracting insights and generating recommendations. The inventory and data lake 44 may store the network topology, components and its relations, as well as historical and real-time network data, including geodata such as maps, geographic infrastructure and constraints, geolocation information for network components, providing the necessary foundation for analysis and prediction. The real network 45 represents the actual deployed (network/IT) infrastructure, to which network configurations and optimizations are applied to. The policy management component 46 may govern operational rules and constraints, ensuring that automated decisions comply with predefined guidelines and specifications. The digital twin/simulation/sand-box environment 47 may act as a controlled testbed, allowing network changes to be validated before implementation in the live system.

The data/process flow implementation in Fig. 5 builds upon this architecture 40 by illustrating how information flows between these components to enable continuous optimization and decision validation. The process 50 may begin with the Real Network 45 updating the inventory and data lake 44 (Step 1), ensuring that the latest runtime data is stored. This data may then be used to update the Digital Twin 47 (step 2a), and be processed and analyzed by the analytics component 43 (Step 2b), synthesizing insights and abstracting patterns. The analytics component 43 may update the Knowledge Graph 42 (Step 3a), which stores structured know-how including relationships and dependencies. Simultaneously, the analytics component 43 may interact with the Al (or human) component 41 (Step 3b) to (automatically) execute optimizations while providing context data, and optionally to refine models or retrain algorithms, ensuring that data-driven insights remain accurate. The Digital Twin/simulation/sandbox environment 47 (Step 3c) and the Policy Management 46 (Step 3d) may also be updated, allowing for controlled experimentation and validation of network optimizations before real-world implementation.

The human/Al component 41 may interact with the KG 42 (Step 4), e.g. via queries, to draw inferences, and refine decisions. This leads to the testing of a proposed change decision in the simulation/sandbox environment 47 (Step 5) before a change is validated against the current policies (Step 6) and once validated, implemented in the real network 45 (Step 7). This process may ensure that all KG-supported optimizations are validated, compliant with operational constraints, and thoroughly tested before being deployed in the live system.

Figs. 4 and 5 represent an example implementation of a highly automated, Al-driven network management and governance system that integrates real-time data collection, structured knowledge representation, analytical processing, and simulation-based validation to continuously optimize mobile network operations. The use of a knowledge graph for complex reasoning taking into account more knowledge than humans can comprehend, combined with Al and analytics enables dynamic adaptation to changing network conditions. Even without a Digital Twin, this architecture may ensure that network decisions are not only data-driven but also compliant with any policy, rule and directive before real-world application, reducing the risk of network failures and enhancing efficiency. Policies also act as a control point to hinder non-compliant changes, e.g. by Al hallucination, wrong Al-made associations or Al data repetitions without a real understanding of the situation and domain knowledge, which is a current drawback of Al in productive systems.

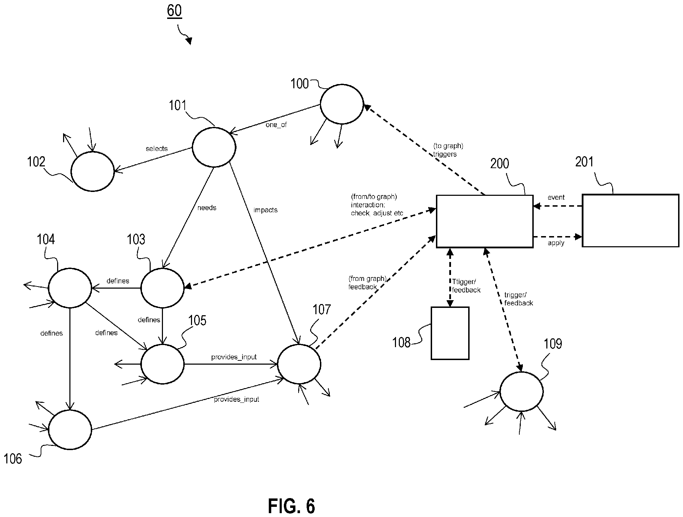

**Fig. 6** illustrates an automated cell planning system 60 that utilizes a semantic knowledge graph to optimize network quality and performance based on predefined constraints, real-time evaluations, and feedback loops. The representation in Fig. 6 demonstrates how different nodes, representing functional components of the planning process, interact with each other to generate, evaluate, and apply network optimizations.

The cell planning system 60 is composed of multiple interconnected nodes, each representing a distinct aspect of the automated cell planning and optimization process. Node 100 represents automated cell planning, which may be responsible for initiating the optimization process based on a detected network problem. Node 101 represents the specific cell parameter optimization use case for this example, while other use cases may include modifications such as antenna hardware changes, cell activation, or new site deployments. Node 102 represents predefined templates with constraints, which may include regulatory rules such as maximum power emission, antenna hardware profiles with radiation pattern and main lobe, and adjustable parameters such as emission power, electrical tilt, and MIMO settings. This template may serve as a guideline for ensuring that any proposed changes adhere to operational constraints. Node 103 represents an optimization area core polygon, which may define a primary geographic area where modifications are being considered, while node 104 represents a buffer area polygon, which may ensure that cascading effects, such as interference, are taken into account. Further considerations about the size and shape of the polygones are not depicted for simplicity reasons, but geographic and infrastructure constraints, such as information from Fig. 3 may be taken into account. Node 105 may store, or reference to, cell IDs, which are part of the area polygones and which may be used to identify and manage individual network components during the planning process. Node 105 is preferably linked to the graph-based inventory, which is not shown for simplicity reasons. Node 106 represents (geographic) Areas of Interest (AOI), accounting for network quality or other constraints that must be considered when optimizing network configurations. This may preferably also be linked to Fig. 3 or similar, and aspects such as population density and competing network operators because of the impact on radio ware interference and business strategies.

The optimization strategy is represented by node 107, which may fine-tune calculations for each cell and geographic area using further knowledge stored in the same or additional linked knowledge graph(s) (KG). Propagation model calculations are represented by node 108, which may execute simulations and feedback loops to evaluate multiple potential solutions before implementation. Node 109 represents an evaluation process using the same or additional KGs, where various objectives, such as quality, coverage, capacity, performance across different layers, AOI-specific targets, and operational or business impacts may be assessed. Node 200 represents Al and/or human interaction, using events such as fault or performance data from the real network (Node 201), drawing inferences from the Knowledge Graph (KG), validating decisions, triggering KG-related actions and calculations, and ensuring that network planning aligns with predefined goals. Node 201 represents the real network, where approved optimizations may be applied.

Fig. 6 describes a structured workflow for network optimization. The process may begin when node 100 (Automated Cell Planning) is triggered or detects a network issue or inefficiency, triggering a set of predefined cell parameter optimization use cases (Node 101). These optimizations may rely on predefined templates and constraints (Node 102) to ensure compliance with network policies, regulatory requirements, and hardware capabilities. The optimization process may then be applied to the designated optimization area core polygon (Node 103), with consideration for surrounding areas via the buffer area polygon (Node 104) to prevent unintended interference or degradation in adjacent cells. The list of affected cells (Node 105) and additional area-specific constraints (Node 106) may be factored into the decision-making process.

The optimization strategy (Node 107) may refine calculations using real-time data and historical knowledge from the Knowledge Graph, ensuring that optimization actions align with existing policies and best practices. Propagation model calculations (Node 108) may run multiple simulations, testing various configurations to identify the most effective solutions. Once one or several solutions are determined, it may be evaluated (Node 109) against key performance indicators (KPIs) such as coverage, capacity, and interference levels before application. Based on this evaluation, the Al system or human operator at node 200 may review the proposed changes, drawing inferences from the knowledge graph to validate whether the optimization should proceed.

Upon validation, which is preferrably automated, the recommended network adjustments may be applied to the real network (Node 201), implementing the changes in the live system. Throughout this process, interactions occur between the optimization framework and the knowledge graph, ensuring that real-time feedback, prior network knowledge, and predefined constraints are considered. Fig. 6 highlights the role of KG interaction and feedback loops, where real-world performance data influences future planning and optimization processes, allowing for continuous refinement and improvement of network management strategies.

In summary, Fig. 6 illustrates a knowledge-driven approach to automated cell planning in mobile communication networks. By integrating semantic knowledge graphs, Al-driven optimization, real-time feedback, and predefined constraints, the system ensures that network adjustments are data-driven, regulatory-compliant, and performance-optimized before being deployed in live environments. This structured methodology may enable autonomous intelligent networks and proactive network management, reducing manual intervention while continuously improving service quality and resource allocation. Further and more generic, this approach enables network self-governance by automatically managing any situation arising from input data, with the help of semantic KGs.

The present disclosure proposes a semantic knowledge graph (KG)-based approach for managing and optimizing mobile communication networks. The knowledge graph may model domain know-how, the network's structure, operational policies, and external influencing factors using nodes and relationships that represent network elements, performance indicators, and decision-making rules. The proposed approach may enable a systematic, context-aware reasoning framework that continuously updates and refines network configurations based on real-time performance data and Al-driven inference techniques.

It is proposed to integrate telecommunication domain knowledge into a structured graph-based model. The KG incorporates network inventory data, policies, geographic constraints, timing/versioning information, and metadata, allowing it to correlate runtime data with expertise from historical configurations and provide informed optimization decisions. By associating non-technical contextual data (such as geographic and environmental factors) with technical network configurations, the proposed concept allows for automated, knowledge-driven decision-making. Additionally, machine learning-based reasoning techniques, including deductive, inductive, and abductive inferences, are applied to derive actionable optimization decisions that can be automatically implemented in the mobile network.

To summarize, some embodiments of the proposed concept include:
Radio network knowledge graph construction:
   The present disclosure provides a framework for constructing a radio domain knowledge graph that stores and organizes network-related information, including physical and logical network elements, operational constraints, and optimization policies. The KG may be dynamically updated based on runtime performance data, fault reports, infrastructure updates, and user experience metrics to refine future network optimization decisions.
Automated network optimization using ai reasoning:
   The knowledge graph may enable Al-driven decision-making processes, where network performance indicators (e.g., signal strength, handover failures, congestion levels) may be analyzed in real-time. Al models can infer potential performance bottlenecks and suggest reconfigurations, such as adjusting antenna parameters, modifying frequency allocations, or proposing new cell deployments.
Integration of historical and future network configurations:
   The system may maintain a temporal record of network configurations, allowing for the correlation of past optimizations with performance outcomes. This historical data may be used to enhance predictive analytics, ensuring that future configurations take into account lessons learned from previous optimizations.
Geospatial and environmental awareness in network optimization:
   The KG may integrate geographic and environmental constraints, ensuring that network optimization decisions consider physical obstacles (e.g., mountains, lakes, urban density) and regulatory limitations. This may prevent automated network optimizations from suggesting unrealistic or infeasible adaptations.
Multi-layered knowledge graph for different network domains:
   The present disclosure supports the use of multiple interconnected knowledge graphs, each representing a different domain of mobile network management, such as core networks, transport networks, service policies, and performance analytics. Various KGs may also focus each on specific detailed aspects of a domain. These distributed knowledge graphs may interact to provide a holistic view of the network, enabling cross-domain optimizations.
Closed-loop automation and continuous learning:
   The system may employ a feedback loop where optimization decisions are continuously validated against real-world network performance. If an applied optimization does not yield the expected improvement, the knowledge graph may be automatically updated to refine future decision-making. This enables an adaptive, self-improving, self-learning, self-healing and self-governing network management (system), and thus intelligent autonomous networks. Intelligent means the data-driven reasoning capabilities.

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, -functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

## Claims

1. A method (10) for managing a mobile communication network using a semantic knowledge graph (20; 30), the method comprising:
modeling (12) the mobile communication network and telecommunication domain knowledge as a semantic knowledge graph (20; 30) representing data describing an ontology of the mobile communication network and the telecommunication domain knowledge, the ontology including structured concepts, taxonomies, relationships, and constraints, wherein the semantic knowledge graph (20; 30) is configured to enable logical operations for inference;
obtaining (14) runtime data from the mobile communication network and correlating the runtime data with the semantic knowledge graph to perform reasoning (16), derive optimization decisions, and implement network changes based on the derived decisions.

2. The method (10) of claim 1, wherein the semantic knowledge graph (20; 30) models one or more of
geographic constraints,
expertise derived from historic configurations and its impact,
mathematical or physical rules and laws,
technical data needed for the operation of the mobile communication network, and infrastructure characteristics of the of the telecommunication domain and/or the mobile communication network and its coverage area.

3. The method (10) of any one of the previous claims, wherein the semantic knowledge graph (20; 30) comprises at least one of
(a) inventory data describing physical and logical elements of the mobile communication network and relations among those elements;
(b) policies representing intended behaviors or constraints for network operation;
(c) geographic information describing topological, environmental, and infrastructural characteristics of the network coverage area;
(d) timing, versioning, and sensitivity information associated with network elements; and
(e) metadata linking semantic relationships between the network elements.

4. The method (10) of any one of the previous claims, wherein the runtime data associated with the semantic knowledge graph (20; 30) is collected in real-time from network elements, including at least one of base stations, cells, antennas, or user devices, and wherein the runtime data associated with the semantic knowledge graph (20; 30) comprises at least one of key performance indicators, KPIs, fault data, or user feedback.

5. The method (10) of any one of the previous claims, wherein associating the semantic knowledge graph (20; 30) with runtime data of the mobile communication network comprises at least one of
(a) collecting, structuring, and analyzing runtime data from network elements, including base stations, cells, antennas, or user devices;
(b) transforming the collected runtime data into graph-compatible representations by creating nodes and edges with associated metadata;
(c) linking the runtime data to existing nodes in the semantic knowledge graph based on predefined policies and contextual relationships; and
(d) continuously updating the semantic knowledge graph in real-time using application programming interfaces, APIs, or data streaming mechanisms to maintain synchronization with the mobile communication network.

6. The method (10) of any one of the previous claims, wherein operational and optimization decisions derived from the semantic knowledge graph (20; 30) are applied to the mobile communication network using a configuration management interface.

7. The method (10) of any one of the previous claims, further comprising
analyzing (18) an impact of the implemented network changes on the performance of the mobile communication network; and
updating (19) the semantic knowledge graph (20; 30) based on the analyzed impact.

8. The method (10) of claim 7, wherein updating (18) the semantic knowledge graph (20; 30) includes incorporating new semantic relationships, abstractions, concepts, or metadata derived from observed interactions within the mobile communication network.

9. The method (10) of claim 7 or 8, further comprising using machine learning to update the semantic knowledge graph (20; 30), the updating (18) including
(a) identifying patterns and correlations in runtime data and optimization outcomes; and
(b) adapting semantic relationships or metadata to refine subsequent decision-making.

10. The method (10) of any one of the previous claims, wherein reasoning (16) on the semantic knowledge graph (20; 30) comprises at least one of
(a) traversing the knowledge graph (20; 30) to identify information from nodes and edges relevant to a contextual situation or network optimization objective;
(b) applying at least one of deductive, inductive, or abductive inferences based on semantic concepts, structured taxonomies, relationships, and constraints stored in the graph to derive optimization decisions;
(c) evaluating predefined policies and constraints in the graph to ensure compliance with operational requirements; and
(d) resolving conflicts among proposed optimization decisions using prioritization or optimization algorithms to produce a feasible solution.

11. The method (10) of any one of the previous claims, wherein the operational or optimization decisions derived from the semantic knowledge graph (20; 30) include at least one of:
(a) modifying network configurations;
(b) adjusting network parameters;
(c) proposing new network cell site deployments,
(d) remediating problems or incidents,
(e) optimizing service quality, or
(f) introducing new services.

12. The method (10) of any one of the previous claims, further comprising
analyzing and validating the optimization decisions using a simulation framework before applying the decisions to the mobile communication network, and wherein an impact of the implemented network changes is analyzed by comparing updated runtime data to intended performance outcomes of the mobile communication network.

13. The method (10) of any one of the previous claims, further comprising
integrating multiple knowledge graphs representing different domains of the mobile communication network, including at least one of core networks, transport networks, or global networks, and wherein the semantic knowledge graph comprises multiple connected or connectable subgraphs, each representing a specific domain of the mobile communication network, including at least one of:
(a) an inventory graph representing physical and logical elements of the network;
(b) a policy graph representing operational policies and constraints;
(c) a performance graph representing runtime data, including key performance indicators and fault data; and
(d) a geographic graph representing environmental and infrastructural constraints,
wherein the subgraphs are interoperable and connected through consistent semantic relationships.

14. The method (10) of any one of the previous claims, wherein the semantic knowledge graph (20; 30) is enhanced by automatically creating helping entities based on:
(a) fault and performance data, which are analyzed to identify patterns and dependencies; and
(b) inferences derived from machine learning models, including revealed relationships, confounding factors, or hypotheses,
wherein the helping entities are integrated into the semantic knowledge graph to relate and evaluate entities that are otherwise non-directly exploitable, and wherein the additions are consistent with a predefined data model of the graph.

15. The method (10) of any one of the previous claims, wherein the semantic knowledge graph (20; 30) is used for network self-governance by automatically managing any situation arising from input data, and to resolve conflicts between optimization decisions proposed by different subsystems or agents of the mobile communication network, and wherein resolving conflicts comprises at least one of:
(a) identifying conflicting optimization decisions by analyzing semantic relationships in the knowledge graph, including dependencies and constraints between network elements represented as nodes and edges;
(b) prioritizing the conflicting optimization decisions based on predefined policies stored in the knowledge graph, including cost, resource availability, and performance impact;
(c) calculating a combined optimization solution that satisfies the predefined policies and minimizes conflict by using reasoning techniques performed on the semantic knowledge graph; and
(d) updating the mobile communication network based on the calculated combined optimization solution.
